# NEUE EUROPÄISCHE PATENTSCHRIFT

(11) **EP 0 891 861 B2**
(45) Veröffentlichungstag und Bekanntmachung des Hinweises auf die Entscheidung über den Einspruch: **30.12.2009**
(45) Hinweis auf die Patenterteilung: 28.04.2004
(21) Anmeldenummer: 97810503.9
(22) Anmeldetag: 17.07.1997
(51) Int. Cl.: B32B 7/06, B65D 77/20, B65D 51/24, G09F 3/02, A63F 3/06

(54) **Verpackungs- und Deckelmaterial**
Material for packaging and for lids
Matériau pour emballage et couvercle

(43) Veröffentlichungstag der Anmeldung: 20.01.1999
(73) Patentinhaber: Alcan Technology & Management AG, 8212 Neuhausen am Rheinfall (CH)
(72) Erfinder: Parmentier, René, 57400 Buhl (FR); Gribling, Raymond, 57445 Reding (FR); Weber, Grégoire, 57400 Sarraltroff (FR); Marbler, Claude A., 57370 Phalsbourg (FR)
(74) Vertreter: Wiedmer, Edwin

(56) Entgegenhaltungen:
- EP-A- 0 349 670
- WO-A-92/07347
- WO-A-97/29968
- BE-A- 680 450
- DE-U1- 29 701 955
- FR-A- 2 463 468
- GB-A- 1 265 830

## Beschreibung

Vorliegende Erfindung betrifft ein Verpackungsmaterial nach dem Oberbegriff des Anspruchs 1 sowie ein Verfahren zur Herstellung von Verpackungs- und Deckelmaterial und die Verwendung desselben.

Es ist bekannt, beispielsweise Genussmittel, wie Schokoladeriegel, Bonbons und andere Süssigkeiten z.B. in Beutel abzufüllen oder z.B. Süssspeisen, wie Yoghurt, Marmelade, Kompott oder cremige Dessertspeisen, wie auch dehydratisierte Nahrungsmittelzubereitungen und Getränke, in Becher oder Gläser abzufüllen und die Becher oder Gläser mit einer Deckelfolie zu verschliessen. Nahrungsmittel, wie Käse, als Frisch-, Weich-, Schmelzkäse usw., können in einer Folienverpackung oder in einer Schachtel angeboten werden. Eine Verpackung, wie ein Sack oder Beutel, z.B. für Kaffee, Fertigsuppe, Confiseriewaren usw. oder ein bereits bedeckeltes Glas oder Becher, kann mit einer Banderole oder einem Siegelstreifen beklebt sein.

Die Veröffentlichungsschrift WO 97/29968 beschreibt zum Beispiel einen Kronendeckel mit Dichteinlage zum Verschliessen von Flaschen, wobei die Dichteinlage eine vom Dekkelboden ablösbare Folie ist, und zwischen dem Deckelboden und der Dichteinlage ein Druckmuster angeordnet ist, welches durch das ablösen der Dichteinlage sichtbar gemacht werden kann.

Die Veröffentlichungsschrift FR 2 463 468 beschreibt eine Deckelfolie mit zwei, gegenseitig in ihren Randbereichen verklebten Materiallagen zwischen welchen ein Bildmuster angeordnet ist, welches durch das Trennen der Materiallagen sichtbar wird.

Aufgabe vorliegender Erfindung ist es, ein Verpackungsmaterial für die Herstellung von Folienverpackungen oder Schachtelverpackungen oder ein Deckelmaterial für Gefässe, resp. eines Verpackungsmaterials für die Herstellung von Teilen von Verpackungen, wie Banderolen oder Siegelstreifen, zu schaffen, welches zur Erhöhung der Attraktivität eines derart verpackten Produktes, beispielsweise einen Wettbewerb oder eine die Neugier des kaufenden Publikum weckende, beim Kauf versteckte, Information am Verpackungsmaterial, enthält. Die Wettbewerbsauflösung oder die Information soll erst nach dem Kauf, dann aber auf eine leichte Art und Weise, dem Käufer zur Verfügung stehen. Das im angegebenen Sinne verwendbare Verpackungsmaterial soll die Anforderungen der leichten Herstellbarkeit und der einfachen Anwendung erfüllen und es soll bei der Beschaffung der Information dem Spieltrieb entgegenkommen.

Erfindungsgemäss wird dies durch die kennzeichnenden Merkmale des Anspruchs 1 erreicht.

Das Verpackungs- oder Deckelmaterial nach vorliegender Erfindung liegt in Form eines Laminates oder Verbundes vor. Zweckmässig wird das Verpackungs oder Deckelmaterial in Form von Bögen oder als Endlos- oder Rollenware hergestellt und die einzelnen Verpackungseinheiten durch Ausschneiden oder Ausstanzen etc. und Siegeln oder Kleben zum Beispiel zu Schachteln, Beuteln oder Sachets verarbeitet. Die Rollenware kann auch durch Schneiden oder Stanzen zu Einwicklern für kleinteilige Waren oder für Umhüllungen von Stückgut, wie Käse, oder für Schachteln etc. verarbeitet werden. Das Deckelmaterial kann in Form von Endlos- oder Rollenware vorliegen und durch Ausstanzen oder Ausschneiden können die Einzeldeckel vor oder nach dem Aufsiegeln oder Aufkleben auf das Gefäss erzeugt werden.

Das Verpackungs- oder Deckelmaterial enthält eine erste Materiallage a) und eine zweite Materiallage e). Die erste und die zweite Materiallage enthalten beispielsweise -- unabhängig voneinander -- ein Papier, eine Kunststoff-Monofolie oder ein Kunststoffverbund oder eine Metallfolie oder Verbunde aus zwei oder mehr dieser Materialien untereinander.

Die Papiere für die Materiallagen a) und e) können beispielsweise Zellstoffpapiere und daraus hergestellte Druckpapiere sein. Es können auch Zeitungsdruckpapiere, Illustrationsdruckpapiere, Schreib- und Zeichenpapiere, Etikettenpapiere und Büropapiere sein. Bevorzugt werden Druckpapiere. Dies sind beispielsweise Papiere für Hochdruck, für Buchdruck, Zeitungsdruckpapiere, Papiere für Flachdruck und Papiere für Tiefdruck. Zweckmässig sind Druckpapiere mit einem Flächengewicht von 18 bis 250 g/m². Bevorzugt sind Papiere mit einem Flächengewicht von 18 bis 120 g/m². Die Papiere sind in der Regel ungestrichene Papiere. Die Papiere können weiss oder auch gefärbt sein. die Färbung kann beispielsweise durch Massefärbung, durch Oberflächenfärbung in der Leimpresse, Tauchfärbung oder Oberflächenfärbung durch Streichen erzielt werden. Die Färbung kann eine helle oder bunte Färbung sein. Die Papiere können auch umweltschonend, d.h. ohne Verwendung von Säure, wie Schwefelsäure, und/oder ohne Chlorbleichung, hergestellt werden. Auch die Verwendung von rezykliertem Papier ist möglich. Neben den genannten Papieren können auch Papiere aus Synthesefasern verwendet werden. Es können auch sogenannte Sicherheitspapiere, enthaltend Sicherheitschemikalien oder - fäden oder -fasern verwendet werden.

Gegebenenfalls können die Papiere beschichtet und/oder kaschiert sein. Dazu bieten sich beispielsweise als Beschichtungsverfahren die Extruderbeschichtung, die Dispersionsbeschichtung, und Lackierverfahren an. Die Beschichtung kann ein Lack, ein Wachs-, eine Paraffin- oder eine Hotmelt- Beschichtung sein. Es können auch Kaschierverfahren angewendet werden, um eine Papierbahn mit beispielsweise einer vorgefertigtem Kunststofffolie zu vereinigen. Andere Beschichtungsverfahren sind Verfahren für Beschichtungen aus der Dampfphase im Vakuum (chemical vapour deposition oder physical vapour deposition).

Die Monofolien aus Kunststoffen oder die Verbunde aus Folien können aus thermoplastischen Kunststoffen beispielsweise auf Basis von Polyester, Polyamiden, Polyolefinen, Polystyrolen, Polyvinylchlorid, Polycarbonaten oder aus Zellglas usw. bestehen oder diese Materialien enthalten.

Geeignete Polyester sind z.B. Polyalkylenterephthalate, wie Polyethylenterephthalat, oder die Polyethylenterephthalate, bekannt unter den Begriffen A-PET, PETP, PETG oder G-PET. Bevorzugte Dicken sind 6 bis 50 µm und insbesondere 10 bis 36 µm, resp. 12 µm.

Polyamide sind beispielsweise das Polyamid 6 und 6.6; Polyamid 11; Polyamid 12; Polyamid 6,12 oder Polyamid 6-3-T usw.

Polyolefine sind beispielsweise Polyethylene, wie Polyethlyene niedriger, mittlerer oder hoher Dichte, lineare Polyethlyene niedriger, mittlerer oder hoher Dichte oder Polypropylene, wie amorphes, kristallines oder hochkristallines Polypropylen, orientiertes Polypropylen, oder Gemische enthaltend genannte Polyolefine. Bevorzugte Dicken für Polypropylene sind 6 bis 50 µm und insbesondere 10 bis 36 µm, resp. 20µm.

Beispiele von Polystyrolen sind das thermoplastische Polystyrol, Copolymere und Polyblends des Styrols, wie Styrol/Acrylnitril-Copolymere oder Styrol/Butadien-Propfpolymere usw.

Die vorgenannten Folien aus thermoplastischen Kunststoffen werden in Dicken von beispielsweise 6 bis 200 µm, zweckmässig 10 bis 100 µm und, soweit nicht anders angegeben, bevorzugt von 20 bis 80 µm angewendet.

Die Folien aus den genannten thermoplastischen Kunststoffen können unverstreckt oder axial oder biaxial verstreckt sein. Die Folien können auch Füllstoffe, wie Talkum, Glas, Quarz, Glimmer, Kreide, Bariumsulfat, Zinkoxid, Titanoxid usw. in Mengen von z.B. 2 bis 60 Gew.-% enthalten.

Unter Zellglas wird beispielsweise regenerierte Cellulose, das sogenannte Cellulosehydrat, auch bekannt unter Cellophan, verstanden. Die Zellglasfolien weisen eine Dicke von z.B. 8 bis 200 µm auf.

Die genannten thermoplastischen Kunststoffe können auch durch Kaschieren, fallweise mittels Haftvermittlern und Kaschierklebern oder durch Coextrusion usw. zu Kunststoff-Folienverbunden aus zwei, drei oder mehreren Monofilmen verarbeitet werden. Die Kunststoff-Folienverbunde können z.B. eine Dicke von 16 bis 200 µm aufweisen.

Die Kunststoffe können klar, durchscheinend oder opak und ungefärbt, angefärbt oder durchgefärbt sein.

Die Metallfolie ist beispielsweise eine Aluminium-, Eisen- oder Stahlfolie, wobei die Aluminiumfolie bevorzugt ist. Die Aluminiumfolie kann aus Reinaluminium oder aus einer Aluminiumlegierung AlFeMn, wie AlFe1,5Mn, AlFeSi oder AlFeSiMn, beispielsweise in einer Reinheit von 97,5 und höher, vorzugsweise in einer Reinheit von 98,5 und höher sein. Die Metallfolie kann eine Dicke von beispielsweise 6 bis 100 µm, vorzugsweise 6 bis 60 µm aufweisen.

Es ist auch möglich, für die Materiallagen a) und e) -- unabhängig voneinander -- Mehrschicht-Verbunde, enthaltend die genannten Papiere, Kunststoff-Folien, Kunststoffolienverbunde, ein- oder beidseitig metallisierten Papiere oder Kunststoff-Folien, resp. -Verbunde und/oder Metallfolien anzuwenden.

Die Papiere und Kunststoffe, resp. Mehrschichtverbunde daraus, für die Materiallagen a) und e) können metallisiert sein, d.h. metallische Schichten aufweisen. Eine Metallisierung kann z.B. durch ein Vakuumdünnschichtverfahren oder durch Sputtem usw. erfolgen, wobei metallische Schichten in Dicken von beispielsweise 10 bis 60 nm, vorzugsweise 10 bis 30 nm (Nanometer), Dicke auf der jeweiligen Oberfläche abgeschieden werden. Als Metalle für die metallische Abscheidung sind z.B. Aluminium, Eisen, Stahl, Nickel, Kupfer, Silber usw. geeignet.

Kunststoff-Verbunde und auch Papiere können Diffusionsperrschichten, z.B. aus einer Ethylvinylalkohol-Folie, einer Polyvinyliden-Folie oder einer keramischen Schicht enthalten. Die keramische Schicht kann eine 5 bis 500 nm (Nanometer) dicke, mittels eines Vakuumdünnschichtverfahrens (Chemical vapour deposition, physical vapour deposition) aufgebrachte Schicht aus Oxiden oder Nitriden oder Gemischen davon, von Metallen oder Halbmetallen, wie z.B. SiOₓ oder Al_{y}O_{z}, wobei x eine Zahl von 1,1 bis 1,9 ist, resp. y/z einen Faktor von 0,2 bis 1,5 darstellt, sein.

Die Materiallage a) und die Materiallage e) können -- unabhänig voneinander -- auf einer oder beiden Seiten eine partielle oder vollflächige Beschichtung aufweisen. Die partielle oder vollflächige Beschichtung kann insbesondere eine Bedruckung, wie ein Aussen- und/oder Konterdruck, darstellen. Dabei kann es sich z.B. um einen Hochdruck, Tiefdruck, Offsetdruck, Siebdruck, Heliodruck oder Flexodruck handeln. Die Bedruckung kann ein- oder mehrfarbig sein und stellt bevorzugt ein Werbeaufdruck oder eine Produktinformation oder - identifkation dar. Bevorzugt sind bunte Bedruckungen.

Insbesondere können die erste Materiallage a), und fallweise die zweite Materiallage e), einen nach innen, d.h. gegen die Klebstoffschicht d) gerichteten Konterdruck aufweisen und/oder an der nach aussen gerichteten Seite der Materiallage a), und fallweise der zweiten Materiallage e), kann eine Bedruckung angebracht sein.

Auf der Materiallage a), oder, falls vorhanden auf dem Konterdruck, wird das Druckmuster b) aufgedruckt. Das Druckmuster b) kann eine Charaktere oder eine Reihe von Charakteren, wie figürliche oder abstrakte graphische Gestaltungen, Zahlen und Buchstaben, Figuren oder andere beliebige Schriften oder Muster, sein. Das Druckmuster b) stellt insbesondere die vorerst verborgene Information für einen Wettbewerb, eine Aufgabenlösung oder dergl. dar. Diese Information wird erst freigelegt und damit sichtbar, bei einer Trennung, d.h. einem Abschälen oder Abheben, der ersten Materiallage a) von der zweiten Materiallage e).

Das Druckmuster b) ist in seiner Grösse bezüglich der vorgesehenen Verpackungseinheit, wie einer Umhüllung oder einer Schachtel, so gewählt, dass beispielsweise eine Deckfläche der Umhüllung oder eine Schachtelfläche oder im Falle eines Beutels vorzugsweise auf wenigstens einer Beutelseite, wenigstens ein vollständiges Druckmuster b) zu liegen kommt. Bei Deckeln soll wenigstens ein vollständiges Druckmuster ist innerhalb der Begrenzungen der vorgesehenen Naht zwischen dem Deckel und dem Gefäss angeordnet sein.

Das Druckmuster b) wird durch die Trennschicht c) überlagert. Die Trennschicht d) ist in der Ausdehnung wenigstens so gross gewählt, dass das Druckmuster b) vollständig abgedeckt ist oder das Druckmuster b) wird von der Trennschicht c) überragt. Vorteilhaft dehnt sich die Trennschicht c) über das ganze Druckmuster b) allseitig um ein kleines Mass, beispielsweise um 1 bis 5 mm, hinaus. Die Trennschicht c) kann eine nicht haftende Schicht, z.B. aus Polyamid, Lacken, Wachs, Paraffin oder einem Hotmelt sein. Die Trennschicht c) und die Klebstoffschicht d) sind chemisch nicht kompatibel und bilden deshalb untereinander keine Haftung aus.

Das Verpackungs- und Deckelmaterial nach vorliegender Erfindung enthält auch eine vollflächige Klebstoffschicht d), wobei die Klebstoffschicht d) einen Klebstoff enthält oder aus diesem besteht.

Die Klebstoffe können z.B. Stärke, Eiweiss, Caseinleime, Celluloseäther und Celluloseester, wie Methylcellulose oder Nitrocellulose, Naturkautschuk, Synthesekautschuk, Polyäthylen, wie Äthylen-Vinylacetat-Copolymerisate, Polypropylen, Polyvinylester, wie Polyvinylacetate, Polyvinylchlorid-Homopolymerisate oder Copolymerisate, wie Vinylchlorid und Vinlyacetat oder Vinylchlorid und Methacrylsäureester-Polymerisate, Polyvinyläther, Polyvinylpyrrolidon, Polystyrol, Polyamide, Polyester, Polyurethane, Polyisocyanate, Epoxidharze, Phenolharze, Resorcinharze, wie Resorcin-Formaldehydharze und Resorcin-Phenol-Formaldehydharze, Harnstoffharze, Melamin-Formaldehydharze und nichtreaktive Harze, wie Kolophoniumharze, Tallharze, Kohlenwasserstoffharze, Carbamidsäureester-Harze oder Cyclohexanonharze sein oder von diesen Stoffen enthalten.

Die Klebstoffe können auch Weichmacher enthalten. Die Klebstoffe können lösungsmittelfrei sein oder können Lösungsmittel, beispielsweise Benzin, Toluol, Xylol, Methylenchlorid, Trichloräthylen, Trichloräthan, Essigester, Aceton Methyläthylketon, Methylisobutylketon oder Cyclohexanon enthalten. Es ist auch möglich, wasserhaltige oder wasserlösliche Klebstoffe zu verwenden. Die Klebstoffe können ferner Füllstoffe enthalten, wie Kieselsäuren, Kreiden, Leicht- und Schwerspat oder faserige Materialien.

Es können verschiedene Klebstoffsysteme zur Anwendung gelangen. Beispielsweise ohne chemische Reaktion abbindende Klebstoffe oder lösungsmittelfreie Klebstoffsysteme, in Form von Schmelzklebstoffen oder Klebeplastisolen. Es ist auch möglich, Klebstofflösungen, deren Lösungsmittel vor der Klebung entweichen, Kontaktklebstoffe oder Haftklebstoffe zu verwenden. Es ist auch möglich, Klebstofflösungen, deren Lösungsmittel während der Klebung verdunsten, einzusetzten oder wässrige Stärke- und Dextrinleime oder sonstige wässrige Klebstofflösungen. Dann sind wässrige Dispersionen von polymeren Verbindungen, wie Dispersionsklebstoffe, zu nennen. Auch zur Anwendung gelangen können Reaktionsklebstoffe, wie Polymerisationsklebstoffe, zu denen die zweikomponentigen Polymerisationsklebstoffe und die einkomponentigen Polymerisationsklebstoffe gehören. Ferner können Polyadditionsklebstoffe, wie reaktive Polyurethan-Klebstoffe, und schliesslich Polykondensationsklebstoffe, wie Polymethylol-Verbindungen, Silicon-Klebstoffe oder Polyimide und Polybezimidazole genannt werden. Weitere Klebstoffe sind Stärke- und Dextrinkklebstoffe, Polyvinylacetat-Dispersionsklebstoffe, modifizierte Stärkeklebstoffe oder mit Casein stabilisierte Copoylmerdispersionen oder Kautschuklatices oder Polyacrylesterlösungen oder Polyurethan-Klebstoffe.

Die Klebstoffschicht d) kann auch Wachse, Paraffine oder Hotmelts enthalten oder daraus bestehen oder es kann sich um eine Extrusionsschicht aus Polymeren, wie aus Polyolefinen, Polyamiden oder Polyestern handeln.

In der Klebstoffschicht d) wird der Klebstoff bevorzugt in einer Menge von 1,4 bis 12 g/m2 angewendet. Besonders bevorzugt beträgt die Menge an Klebstoff von 4 bis 7 g/m2.

Zur Verbindung der ersten mit der zweiten Materiallage kann die Klebstoffschicht d) vollflächig auf die erste Materiallage a) und dabei auch auf die Trennschicht c) aufgebracht werden. Vorzugsweise jedoch liegt die zweite Materiallage e) als Rollenware oder in Blattform vor und wird mit dem Klebstoff, unter Bildung der Klebstoffschicht d), beschichtet. Der auf der ersten Materiallage a) oder der zweiten Materiallage e) befindliche Klebstoff kann, falls erforderlich, aktiviert werden. Anschliessend kann die zweite Materiallage e) und die erste Materiallage a) zusammengeführt und gegenseitig über die Klebstoffschicht d) verklebt werden. Es können auch die zweite Materiallage e) und die mit dem Druckmuster b) und der Trennschicht c) beschichtete erste Materiallage kontinuierlich zusammengeführt und in den sich ausbildenden Spalt die Klebstoffschicht d) eingebracht werden. Z.B. durch Kontakt oder durch Wärme- und/oder Druckbehandlung verkleben die beiden Materiallagen a) und e).

Das Aufbringen des Klebstoffes kann durch Aufsprühen, durch Aufpinseln, durch Aufwalzen, mit einem Rakel, durch Auftragen mit Leimscheibe, durch Auftragen im Reverse-Roll-Coating-System, im Curtain-Coater-Prinzip oder z.B. bei Schmelzklebstoffen, mit einem Düsenauftragsaggregat, erfolgen.

Vorzugsweise ist auf der nach aussen gerichteten Seite der zweiten Materiallage e) eine Siegelschicht f) angeordnet. Die Siegelschicht f) kann ein Siegellack oder eine Siegelfolie sein. Die Siegellacke oder -folien enthalten in der Regel Polyolefine, wie Polyethylen, Polypropylene oder Ionomerharze. Die Verpackungs- oder Deckelmaterialien können beispielsweise anstelle der Siegelschicht auch aussenliegende Klebstoffschichten enthalten, die sich bei Kontakt oder auf Druck und/oder Wärme zu Nähten an Schachteln oder Beuteln ausbilden oder Deckelfolien sich mit dem Schulterbereich eines Gefässes verbinden.

Die Siegelschichten dienen zur Ausbildung von Siegelnähten zur Gestaltung einer Schachtel, eines Beutels oder Sachets usw. oder zum dichten Verschliessen von Gefässen, wie Bechern, Gobelets, Schalen, Menueschalen oder Gläsern mit dem Deckelmaterial.

An der Verpackungs- oder Deckelfolie nach vorliegender Erfindung weist in der Regel die erste Materiallage a) bei einer Umhüllung, an einer Schachtel, einem Beutel oder einem bedeckelten Gefäss nach aussen, d.h. bildet die Aussenseite, und die zweite Materiallage e), resp. die darauf angeordnete Siegelschicht f), weist nach innen, gegen den Inhalt der Umhüllung, der Schachtel, des Beutels oder Gefässes usw. Die Anordnung der Materiallagen und der Siegelschicht kann sinngemäss auch vertauscht werden, so dass beispielsweise die Siegelschicht f) sich an der freien Seite der ersten Materiallage a) befindet und entsprechend die erste Materiallage a) gegen den Inhalt in der Umhüllung, der Schachtel, des Beutels oder Gefässes gerichtet ist.

Besonders bevorzugt ist ein Verpackungs- oder Deckelmaterial nach vorliegender Erfindung, das nacheinander folgende Materialschichten enthält:
a) eine Kunststoff-Folie auf Basis von orientiertem Polypropylen in einer Dicke von 18 bis 22 µm, vorzugsweise 20 µm, oder von Polyethylenterephthalat in einer Dicke von 10 bis 15 µm, vorzugsweise 12 µm,
b) ein Druckmuster
c) eine Beschichtung in Form einer Trennschicht
d) eine vollflächige Klebstoffschicht
e) eine Kunststoff-Folie auf Basis von Polyethylenterephtalat in einer Dicke von 6 bis 36 µm, die auf der gegen die Klebstoffschicht d) weisenden Seite in der Dicke von 10 bis 60 nm (Nanometer), vorzugsweise 10 bis 30 nm, metallisiert ist.

Ebenfalls besonders bevorzugt ist ein Verpackungs- oder Deckelmaterial nach vorliegender Erfindung, das nacheinander folgende Materialschichten enthält:
a₀) eine Bedruckung, wie ein Werbedruck etc.,
a) eine Kunststoff-Folie auf Basis von orientiertem Polypropylen in einer Dicke von 18 bis 22 µm, vorzugsweise 20 µm, oder von Polyethylenterephthalat in einer Dicke von 10 bis 15 µm, vorzugsweise 12 µm,
a₁) eine metallisierte Schicht in einer Dicke von 10 bis 60 nm, vorzugsweise 10 bis 30 nm,
b) ein Druckmuster
c) eine Beschichtung in Form einer Trennschicht
d) eine vollflächige Klebstoffschicht
e) ein Papier mit einem Flächengewicht von 15 bis 40 g/m²,
e₁) eine nicht klebende Beschichtung als Feuchtigkeitsschutz, zweckmässig in Form von 0,5 bis 5 g/m² und vorzugsweise 1 bis 3 g/m², eines Lackes oder zweckmässig 2 bis 20 g/m², vorzugsweise 4 bis 12 g/m², Paraffin, Wachs oder Hotmelt.

Die Materialschicht a), die Kunststoff-Folie, kann ein oder auch beidseitig metallisiert sein. Daraus ergeben sich weitere Varianten mit der Schichtfolge Bedruckung ao)/ metallisierte Schicht/ Materialschicht a)/ Materialschicht b) und den weiteren angegebenen Schichten c) bis e₁) oder mit der Schichtfolge Bedruckung ao)/ metallsierte Schicht/ Materialschicht a)/metallisierte Schicht/ Materialschicht b) und den weiteren angegebenen Schichten c) bis e₁).

Auch besonders bevorzugt ist ein Verpackungs- oder Deckelmaterial nach vorliegender Erfindung, das nacheinander folgende Materialschichten enthält:
aₒ) eine Bedruckung, wie ein Werbedruck etc.,
a) ein Papier mit einem Flächengewicht von 15 bis 40 g/m²,
a₁) eine metallisierte Schicht in einer Dicke von 10 bis 60 nm, vorzugsweise 10 bis 30 nm,
b) ein Druckmuster
c) eine Beschichtung in Form einer Trennschicht
d) eine vollflächige Klebstoffschicht
e) eine Kunststoff-Folie auf Basis von Polyethylenterephtalat in einer Dicke von 6 bis 36 µm, die auf der gegen die Klebstoffschicht d) weisenden Seite in der Dicke von 10 bis 60 nm, vorzugsweise 10 bis 30 nm, metallisiert ist.

Bei den genannten Ausführungsformen kann auf der freien Seite der Kunststoff-Folie e) eine Siegelschicht f) in Form eines Siegellackes oder einer siegelbaren Folie aus Polyolefinen, wie Polyethylen, Polypropylen oder eines Ionomer-Harzes angeordnet sein. Definitionsgemäss stellen jeweils die Materialschichten a) die erste Materiallage und die Materialschichten e) die zweite Materiallage dar.

Das vorliegende Verpackungsmaterial zur Herstellung von Verpackungseinheiten oder Teilen davon, oder von Deckelmaterial für Gefässe, enthaltend zwei Materiallagen, kann derart dargestellt werden, dass auf eine bedruckte oder unbedruckte erste Materiallage a) einseitig ein Druckmuster b) aufgebracht wird, dessen Begrenzungen innerhalb der Ausdehnung der Verpackungseinheit, wie z.B. innerhalb einer Beutelnaht oder der Naht zwischen dem Deckel und einem Gefäss, zu liegen kommt, eine Trennschicht c) deren Ausdehnung gleich oder grösser dem Druckmuster b) ist und kleiner ist als die Begrenzungen der Verpackungseinheit, aufgebracht wird und auf der Seite der Trennschicht c) eine zweite Materiallage e) aufgebracht wird, wobei zwischen die erste Materiallage a) und die zweite Materiallage e) eine vollflächige Klebstoffschicht d) eingebracht wird.

Die vollflächige Klebstoffschicht kann zwischen die zulaufenden Materiallagen a) mit dem Druckmuster b) und mit der Trennschicht c) und die Materiallage e) gegeben werden. In anderer Ausführungsform kann die Materiallage a) mit dem Druckmuster b) und mit der Trennschicht c) und/oder die Materiallage e) mit der Klebstoffschicht beschichtet werden und nach dem Beschichten werden die Materiallagen a) und e) zusammengeführt.

Das Druckmuster b) und die Trennschicht c) wird vorteilhaft, wie allfällige Bedruckungen auf der Materiallage a), mittels eines Druckverfahrens aufgebracht.

Die Bedruckung der Materiallage a) in Form eines aussenliegenden Druckes und/oder eines Konterdruckes, das Druckmuster b), und die Trennschicht c) kann somit in Form von Druckbildern nacheinander auf der ersten Materiallage a) angebracht werden. Das Druckmuster b) kann im gleichen oder einem nachgestellten Druckwerk, in dem die aussenseitige Bedruckung und/oder der Konterdruck erzeugt wird, auf die Materiallage a) aufgebracht werden. Für eine massgenaue Überdeckung des Druckmusters b) durch die Trennschicht c) werden vorteilhaft die Druckvorgänge im gleichen Druckwerk ausgeführt. Es kann auch der Aussendruck, resp. der Konterdruck, und das Druckmuster b) im gleichen oder verschiedenen Druckwerken und die Trennschicht c) in einem separaten nachgestellten Druckwerk aufgebracht werden. Dieses letztere Verfahren wird bevorzugt für die Erzeugung von folienförmigem Material für Umüllungen von zum Beispiel Käse. Die Druckwerke können beispielsweise nach dem Buch-, Offset-, Flexo-, Sieb-. Helio-, Tief- oder Kupfertiefdruckverfahren, vorzugsweise nach dem Flexo- oder Heliodruckverfahren, arbeiten.

Vorliegendes Verpackungsmaterial zur Herstellung von Verpackungseinheiten oder Teilen davon, wie Schachteln, Faltschachteln, Folienverpackungen, Beutel, Säcke, Sachets, Taschen, Einwickler und Umhüllungen von Nahrungs- und Genussmitteln oder Spielwaren und dergl., oder Deckelmaterial für Gefässe, wie für die Bedeckelung von Bechern, Gobelets, Schalen, Menueschalen, Töpfen oder Gläsern, enthaltend Nahrungs- und Genussmittel oder das Verpackungsmaterial kann als Banderole oder Siegelstreifen, verwendet werden. Die Banderolen oder Siegelstreifen können neben dem vorgesehenen Verwendungszweck ein Dekorationselement oder ein Originalitätsverschluss darstellen. Als Nahrungs- und Genussmittel können alle bekannten zum Verzehr geeigneten Zubereitungen für Mensch und Tier gelten, z.B. neben vielen anderem, Süssspeisen, Yoghurt, Käse, Suppen, Breie, Babykost, Marmelade, Kompott oder cremige Dessertspeisen, dehydratisierte Nahrungsmittelzubereitungen, Getränke, wie Mineralwässer, Brausen und Limonaden, sofort löslicher, ungemahlener oder gemahlener Kaffee, Fertigsuppen, Confiseriewaren usw.

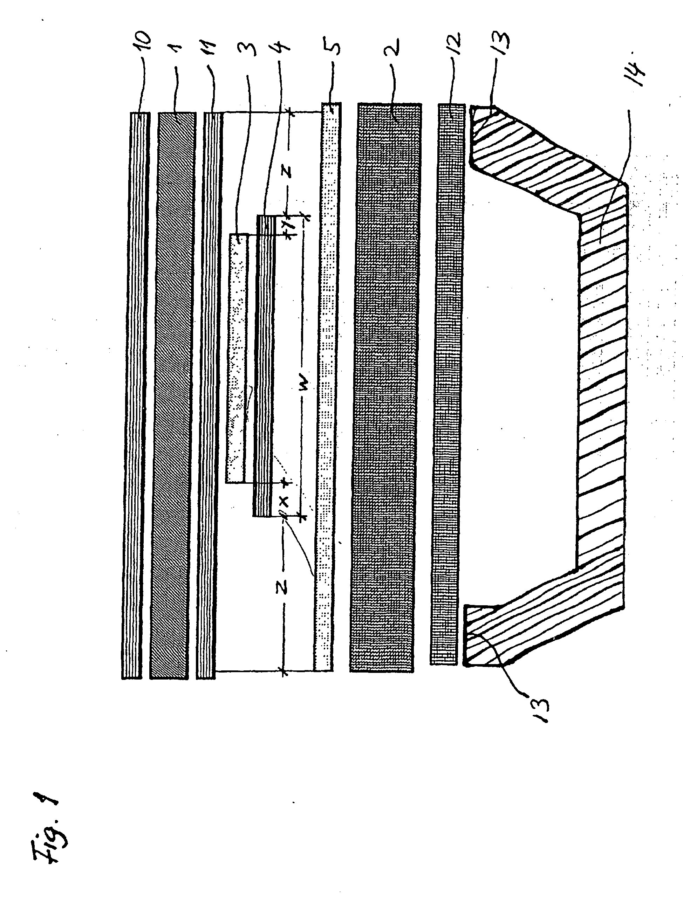

Die Figur 1 zeigt beispielhaft in explosionsartiger Darstellung den Aufbau des erfindungsgemässen Verpackungsmaterials in Folienform und hier als Deckelmaterials für einen Behälter. Die erste Materiallage a) (1) ist mit einer Bedruckung (10) und einem Konterdruck (11) versehen. Auf der einen Seite der Materiallage a) (1), in vorliegendem Beispiel über dem Konterdruck (11), ist das Druckmuster b) (3), beispielsweise die Auflösung eines mit der Bedruckung (10) aufgebrachten Rätsels, angebracht. Damit das Druckmuster b) (3) gelesen werden kann, muss es freigelegt werden können. Deshalb ist das Druckmuster b) (3) von einer Trennschicht c) (4) abgedeckt. Die Trennschicht c) (4) mit einer Ausdehnung (w) überdeckt die ganze Fläche des Druckmusters b) (3) und überragt das Druckmuster b) (3) seitlich um einen Bereich (x) und (y). Die Bereiche (x,y) können, entsprechend der Gestaltung des Druckmusters b) (3), in ihren Ausdehnungen gleich oder unterschiedlich weit über den Rand des Druckmusters b) (3) ragen. Zwischen der oben beschriebenen mit den entsprechenden Schichten beaufschlagten ersten Materiallage a) (1) und der zweiten Materiallage e) (2) liegt vollflächig die Klebstoffschicht d) (5) vor. Die Klebstoffschicht d) (5) haftet trennfest in den Bereichen (z), fallweise über den Konterdruck (11), an der ersten Materiallage a) (1) und der zweiten Materiallage e) (2) und verbindet somit die beiden Materiallagen über die Bereiche (z). Aufgrund der gegenseitigen Unverträglichkeit zwischen den beiden Schichten bildet sich zwischen der Klebstoffschicht d) (5) und der Trennschicht c) (4) im Bereich (w) keine Haftung aus. Die zweite Materiallage e) (5) ist auf der noch freien Seite mit einer Siegelschicht (12) bedeckt. Über diese Siegelschicht (12) können beispielsweise, durch entsprechend angelegte Nähte, Beutel geformt werden oder über die Siegelschicht (12) können Deckel mit der Schulter (13) eines Gefässes (14) verbunden werden.

Bei allen Anwendungen des vorliegenden Verpackungsmaterial zur Herstellung von Verpackungseinheiten, wie Folienverpackungen oder Teilen davon, oder von Deckelmaterial für Gefässe, kann an wenigstens einer Stelle -- z.B. im Bereich einer Anreisshilfe an einem Beutel etc. oder dem Deckel an einem Gefäss -- in einer schmalen Zone, die Trennschicht c) bis an den Rand einer Verpackungseinheit, resp. des Deckels gezogen werden. Dadurch wird eine schmale, z.B. fingerbreite, Zone geschaffen, von der aus die beiden Materiallagen a) und e) einzeln ergriffen und durch gegenseitiges Auseinanderziehen oder Abschälen der Materiallagen a) und e) das Druckmuster b) freigelegt werden kann.

## Patentansprüche

1. Verpackungsmaterial in Folienform zur Herstellung von Verpackungen oder Teilen davon, oder Deckelmaterial für Gefässe, enthaltend wenigstens zwei Materiallagen,
**dadurch gekennzeichnet, dass**
das Verpackungs- oder Deckelmaterial einer Verpackungseinheit nacheinander folgende Materialschichten enthält:
a) eine erste Materiallage, enthaltend ein Papier, eine Kunststoff-Monofolie, ein Kunststoffverbund oder eine Metallfolie oder einen Verbund aus zwei oder mehreren der vorgenannten Materialien,
b) ein Druckmuster, welches auf der ersten Materiallage (a) liegt, wobei dessen Begrenzungen innerhalb der Ausdehnung der jeweiligen Verpackungseinheit oder des Dekkels der Verpackungseinheit liegen,
c) eine Beschichtung in Form einer Trennschicht, welche auf der ersten Materiallage (a) über dem Druckmuster liegt, wobei deren Ausdehnung gleich oder grösser dem Druckmuster (b) ist und kleiner ist als die Ausdehnung der Verpackungseinheit oder des Deckels der Verpackungseinheit,
d) eine vollflächige Klebstoffschicht, welche zwischen der ersten (a) und einer zweiten Materiallage (e) angeordnet ist, und diese über Bereiche (z) miteinander verbindet,
e) eine zweite Materiallage, enthaltend ein Papier, eine Kunststoff-Monofolie, ein Kunststoffverbund oder eine Metallfolie oder einen Verbund aus zwei oder mehreren der vorgenannten Materialien,
wobei die Trennschicht (c) eine gegenüber der Klebstoffschicht (d) nicht haftende Schicht ist, so dass sich in einem der Ausdehnung der Trennschicht entsprechenden Bereich (w) zwischen der Klebstoffschicht d) und der Trennschicht c) keine Haftung ausbildet, und das Druckmuster (b) durch Abheben der ersten Materiallage (a) von der zweiten Materiallage (e) sichtbar gemacht werden kann.

2. Verpackungs- oder Deckelmaterial nach Anspruch 1, **dadurch gekennzeichnet, dass** die erste Materiallage a) eine ein- oder beidseitige Bedruckung und/oder eine ein oder beidseitige Metallisierung aufweist.

3. Verpackungs- oder Deckelmaterial nach Anspruch 1, **dadurch gekennzeichnet, dass** das Druckmuster b) figürliche oder abstrakte graphische Gestaltungen, Zahlen, Buchstaben, und/oder Figuren aus einer oder mehreren Druckfarben ist

4. Verpackungs- oder Deckelmaterial nach Anspruch 1, **dadurch gekennzeichnet, dass** die Klebstoffschicht d) in Mengen von 0,9 bis 12 g/m² vorliegt und an den Materiallagen a) und e) haftet.

5. Verpackungs- oder Deckelmaterial nach Anspruch 1, **dadurch gekennzeichnet, dass**, nach aussen weisend, auf der Schicht e) eine Siegelschicht f) angeordnet ist.

6. Verpackungs- oder Deckelmaterial nach Anspruch 1, **dadurch gekennzeichnet, dass** das Verpackungs- und Deckelmaterial nacheinander folgende Materialschichten enthält:
a) eine Kunststoff-Folie auf Basis von orientiertem Polypropylen in einer Dicke von 18 bis 22 µm oder von Polyethylenterephthalat in einer Dicke von 10 bis 15 µm
b) ein Druckmuster
c) eine Trennschicht
d) eine vollflächige Klebstoffschicht
e) eine Kunststoff-Folie auf Basis von Polyethylenterephtalat in einer Dicke von 6 bis 36 µm, die auf der gegen die Klebstoffschicht d) weisenden Seite in der Dicke von 10 bis 60 nm metallisiert ist.

7. Verpackungs- oder Deckelmaterial nach Anspruch 1, **dadurch gekennzeichnet, dass** das Verpackungs- und Deckelmaterial nacheinander folgende Materialschichten enthält:
a₀) eine Bedruckung, wie ein Werbedruck etc.,
a) eine Kunststoff-Folie auf Basis von orientiertem Polypropylen in einer Dicke von 18 bis 22 µm oder von Polyethylenterephthalat in einer Dicke von 10 bis 15 µm
a₁) eine metallisierte Schicht in einer Dicke von 10 bis 60 nm
b) ein Druckmuster
c) eine Trennschicht
d) eine vollflächige Klebstoffschicht
e) ein Papier mit einem Flächengewicht von 15 bis 40 g/m²
e₁) eine nicht klebende Beschichtung als Feuchtigkeitsschutz, zweckmässig in Form von 0,5 bis 5 g/m² eines Lackes oder zweckmässig 2 bis 20 g/m² Paraffin, Wachs oder Hotmelt.

8. Verpackungs- oder Deckelmaterial nach Anspruch 1, **dadurch gekennzeichnet, dass** das Verpackungs- und Deckelmaterial nacheinander folgende Materialschichten enthält:
a₀) eine Bedruckung,
a) ein Papier mit einem Flächengewicht von 15 bis 40 g/m²
a₁) eine metallisierte Schicht in einer Dicke von 10 bis 60 nm,
b) ein Druckmuster
c) eine Trennschicht
d) eine vollflächige Klebstoffschicht
e) eine Kunststoff-Folie auf Basis von Polyethylenterephtalat in einer Dicke von 6 bis 36 µm, die auf der gegen die Klebstoffschicht d) weisenden Seite in der Dicke von 10 bis 60 nm metallisiert ist

9. Verfahren zur Herstellung von Verpackungs- oder Deckelmaterial zur Herstellung von Verpackungseinheiten oder Teilen davon, oder von Deckelmaterial für Gefässe nach Anspruch 1, enthaltend wenigstens zwei Materiallagen,
**dadurch gekennzeichnet, dass**
- auf eine bedruckte oder unbedruckte, metallisierte oder nicht metallisierte erste Materiallage a)
- einseitig ein Druckmuster b) aufgebracht wird, dessen Begrenzungen innerhalb der Ausdehnung der Verpackungseinheit zu liegen kommen,
- darauf eine Beschichtung in Form einer Trennschicht c), deren Ausdehnung gleich oder grösser dem Druckmuster b) ist und kleiner ist als die Begrenzungen der Verpackungseinheit, aufgebracht wird und
- auf die Materiallage a), auf der freien Seite der Trennschicht c), eine zweite Materiallage e) aufgebracht wird,
- wobei zwischen der ersten Materiallage a) und der zweiten Materiallage e) eine diese über Bereiche (z) miteinander verbindende vollflächige Klebstoffschicht d) eingebracht wird.

10. Verfahren nach Anspruch 9, **dadurch gekennzeichnet dass** die Trennschicht c) mittels eines Druckverfahrens aufgebracht wird.

11. Verwendung des Verpackungsmaterial in Folienform oder des Deckelmaterials für Gefässe nach Anspruch 1, als Verpackungseinheit oder für Teile davon, in Form von Schachteln, Faltschachteln, Folienverpackungen Beuteln, Säcken, Sachets, Taschen, Einwickler und Umhüllungen oder Deckelmaterial für die Bedeckelung von Bechern, Gobelets, Schalen, Menueschalen, Töpfen oder Gläsern oder als Banderolen oder Siegelstreifen.

## Claims

1. Packaging material in the form of film for the production of packages or parts thereof, or lid material for containers, containing at least two layers of material, **characterised in that** the packaging material or lid material of a packaging unit contains the following sequence of material layers:
a) a first layer of material containing a paper, a plastic monofilm, a plastic composite or a metal foil or a composite of two or more of the aforesaid materials,
b) a printing pattern situated on the first layer of material (a), its limits being situated within the dimensions of the respective packaging unit or of the lid of the packaging unit,
c) a coating in the form of a release layer situated on the first layer of material (a) over the printing pattern, its dimensions being equal to or greater than the printing pattern (b) and smaller than the dimensions of the packaging unit or of the lid of the packaging unit,
d) an adhesive layer covering the entire surface arranged between the first layer of material (a) and a second layer of material (e) and joining them together over areas (z), and
e) a second layer of material containing a paper, a plastic monofilm, a plastic composite or a metal foil or a composite of two or more of the aforesaid materials,
wherein the release layer (c) is a layer which does not adhere to the adhesive layer (d) so that in an area (w) corresponding to the extent of the release layer (c) no adhesion occurs between the adhesive layer (d) and the release layer (c), and the printing pattern (b) can be made visible by lifting the first layer of material (a) from the second layer of material (e).

2. Packaging material or lid material according to claim 1, **characterised in that** the first layer of material a) is provided on one or both siedes with printing and/or metallisation.

3. Packaging material or lid material according to claim 1, **characterised in that** the printing pattern b) consists of figurative or abstract graphic designs, numbers, letters and/or figures in one or more colours.

4. Packaging material or lid material according to claim 1, **characterised in that** the adhesive layer d) is present in quantities of 0.9 to 12 g/m² and adheres to the layers of material a) and e).

5. Packaging material or lid material according to claim 1, **characterised in that** a sealing layer f) is arranged on the layer e) in such a manner that it is directed towards the outside.

6. Packaging material or lid material according to claim 1, **characterised in that** the packaging and lid material contains the following sequence of material layers:
a) a plastic film based on oriented polypropylene having a thickness of 18 to 22 µm or on polyethylene terephthalate having a thickness of 10 to 15 µm,
b) a printing pattern,
c) a release layer,
d) an adhesive layer covering the entire surface, and
e) a plastic film based on polyethylene terephthalate having a thickness of 6 to 36 µm, metallised to a thickness of 10 to 60 nm on the side directed towards the adhesive layer d).

7. Packaging material or lid material according to claim 1, **characterised in that** the packaging and lid material contains the following sequence of material layers:
aₒ) printing, such as advertising, etc.,
a) a plastic film based on oriented polypropylene having a thickness of 18 to 22 µm or on polyethylene terephthalate having a thickness of 10 to 15 µm,
a₁) a metallised layer having a thickness of 10 to 60 nm,
b) a printing pattern,
c) a release layer,
d) an adhesive layer covering the entire surface,
e) a paper with a basis weight of 15 to 40 g/m², and
e₁) a non-adhesive coating to protect against moisture, advantageously in the form of 0.5 to 5g/m² of a lacquer or advantageously 2 to 20 g/m² of paraffin, wax or hot-melt.

8. Packaging material or lid material according to claim 1, **characterised in that** the packaging and lid material contains the following sequence of material layers:
aₒ) printing,
a) a paper with a basis weight of 15 to 40 g/m²,
a₁) a metallised layer having a thickness of 10 to 60 nm,
b) a printing pattern,
c) a release layer,
d) an adhesive layer covering the entire surface, and
e) a plastic film based on polyethylene terephthalate having a thickness of 6 to 36 µm, metallised to a thickness of 10 to 60 nm on the side directed towards and adhesive layer d).

9. Method of producing packaging material or lid material for the production of packaging units or parts thereof, or of lid material for containers according to claim 1, containing at least two layers of material, **characterised in that** a printing pattern b) is applied to one side of a printed or non-printed, metallised or non-metallised first layer of material a), its limits being situated within the dimensions of the packaging unit, a coating in the form of a release layer c) is applied thereto, its dimensions being equal to or greater than the printing pattern b) and smaller than the limits of the packaging unit, and a second layer of material e) is applied to the layer of material a) on the free side of the release layer c), an adhesive layer d) covering the entire surface being introduced between the first layer of material a) and the second layer of material e) joining together these two layers over areas (z).

10. Method according to claim 9, **characterised in that** the release layer c) is applied by means of a printing process.

11. Use of the packaging material in the form or film or of the lid material for containers according to claim 1 as a packaging unit or for parts thereof, in the form of boxes, folding boxes, film packages, bags, snacks, sachets, pouches, wrappers and wrappings or lid material for lids for cups, goblets, trays, menu trays, pots or glasses or as bands or sealing strips.

## Revendications

1. Matériau pour emballage sous forme de film pour la fabrication d'emballages ou de parties de ceux-ci, ou matériau pour couvercles pour récipients, comprenant au moins deux couches de matériau, **caractérisé en ce que**, le matériau pour emballage pour couvercle d'une unité d'emballage comprend successivement les couches de matériau suivantes:
a) une première couche de matériau, comprenant un papier, un monofilm de matière plastique, un composite plastique ou un film métallique ou un composite de deux ou plusieurs des matériaux précités,
b) un motif d'impression, qui se trouve sur la première couche de matériau (a), ses limites se situant à l'intérieur de l'étendue de l'unité d'emballage respective ou du couvercle de l'unité d'emballage,
c) un revêtement sous forme d'une couche de séparation, qui se trouve sur la première couche de matériau (a) au-dessus du motif d'impression, son étendue étant égale ou supérieure au motif d'impression (b) et inférieure à l'étendue de l'unité d'emballage ou du couvercle de l'unité d'emballage,
d) une couche de colle sur toute la surface, laquelle est disposée entre la première (a) et une deuxième couche de matériau (e) et relie celles-ci à travers des zones (z),
e) une deuxième couche de matériau, comprenant un papier, un monofilm de matière plastique, un composite plastique ou un film métallique ou un composite de deux ou plusieurs des matériaux précités,
la couche de séparation (c) étant une couche n'adhérant pas sur la couche de colle (d) en sorte que dans une zone (w) correspondant a l'étendue de la couche de séparation aucune adhérence ne découle entre la couche de colle (d) et la couche de séparation (c), et le motif d'impression (b) pouvant être rendu visible par soulèvement de la première couche de matériau (a) par rapport à la deuxième couche de matériau (e).

2. Matériau pour emballage ou couvercle suivant la revendication 1, **caractérisé en ce que** la première couche de matériau a) présente une impression d'un côté ou sur les deux côtés.

3. Matériau pour emballage ou couvercle suivant la revendication 1, **caractérisé en ce que** le motif d'impression b) est une configuration graphique figurative ou abstraite, des chiffres, des lettres et/ou des figures comprenant une ou plusieurs couleurs d'impression.

4. Matériau pour emballage ou couvercle suivant la revendication 1, **caractérisé en ce que** la couche de colle d) est présente en quantités de 0,9 à 12 g/m² et adhère sur les couches de matériau a) et e).

5. Matériau pour emballage ou couvercle suivant la revendication 1, **caractérisé en ce qu'**une couche de scellement f) orientée vers l'extérieur est disposée sur la couche e).

6. Matériau pour emballage ou couvercle suivant la revendication 1, **caractérisé en ce que** le matériau pour emballage ou couvercle présente successivement les couches de matériau suivantes:
a) un film de matière plastique à base de polypropylene orienté d'une épaisseur de 18 à 22 µm ou de polyéthylènetéréphtalate d'une épaisseur de 10 à 15 µm,
b) un motif d'impression,
c) une couche de séparation,
d) une couche de colle sur toute la surface,
e) un film de matière plastique à base de polyéthylènetéréphtalate d'une épaisseur de 6 à 36 µm, qui est métallisé sur une épaisseur de 10 à 60 nm sur la face tournée vers la couche de colle d).

7. Matériau pour emballage ou couvercle suivant la revendication 1, **caractérisé en** e que le matériau pour emballage ou couvercle présents successivement les couches de matériau suivantes :
aₒ) une impression, telle qu'une impression publicitaire, etc.,
a) un film de matière plastique à base de polypropylène orienté d'une épaisseur de 18 à 22 µm ou de polyéthylènetéréphtalate d'une épaisseur de 10 à 15 µm,
a₁) une couche métallisée d'une épaisseur de 10 to 60 nm,
b) un motif d'impression,
c) un couche de séparation,
d) une couche de colle sur toute la surface,
e) un papier d'un grammage de 15 à 40 g/m²,
e₁) un revêtement non adhésif comme protection contre l'humidité, utilement sous forme de 0.5 à 5g/m² d'un vernis ou utilement de 2 à 20 g/m² de paraffine, de cire ou d'un revêtement thermofusible.

8. Matériau pour emballage ou couvercle suivant la revendication 1, **caractérisé en ce que** le matériau pour emballage ou couvercle présente successivement les couches de matériau suivantes :
aₒ) une impression,
a) un papier d'un grammage de 15 à 40 g/m²,
a₁) une couche métallisée d'une épaisseur de 10 à 60 nm,
b) un motif d'impression,
c) une couche de séparation,
d) une couche de colle sur toute la surface
e) un film de matière plastique à base de polyéthylènetéréphtalate d'une épaisseur de 6 à 36 µm, qui est métallisé sur une épaisseur de 10 à 60 nm sur la face tournée vers la couche de colle d).

9. Procédé de fabrication de matériau pour emballage ou couvercle pour la fabrication d'unités d'emballage ou de parties de celles-ci, ou de matériau pour couvercle pour récipients suivant la revendication 1, contenant au moins deux couches de matériau, **caractérisé en ce que**
- sur une première couche de matériau a), imprimée ou non imprimée, métallisée ou non métallisée,
- on applique d'un seul côté un motif d'impression b), dont les limites viennent se placer à l'intérieur de l'étendue de l'unité d'emballage,
- on applique sur celui-ci un revêtement sous la forme d'une couche de séparation c), dont l'étendue est égale ou supérieure au motif d'impression b) et est inférieure aux limites de l'unité d'emballage, et
- sur la couche de matériau a), du côté libre de la couche de séparation c), on applique une deuxième couche de matériau e),
- une couche de colle d) étant appliquée sur toute la surface entre la première couche de matériau a) et la deuxième couche de matériau e) reliant ces deux couches à travers des zones (z).

10. Procédé suivant la revendication 9, **caractérisé en ce que** la couche de séparation c) est appliqué à l'aide d'un procédé d'impression.

11. Utilisation du matériau pour emballage sous forme de film ou du matériau pour couvercle pour récipient suivant la revendication 1, comme unité d'emballage ou pour des parties de celle-ci, sous forme de boîtes, de boîtes pliables, de films d'emballage, de sachets, de sacs, de pochettes, de poches, d'enveloppes et de housses ou comme matériau pour couvercle pour le recouvrement de petits pots, de gobelets, de coupes, d'assiettes ou de verres ou sous la forme de banderoles ou de bande de scellement.
